# FASCICULE DE BREVET EUROPEEN

(11) **EP 2 880 211 B1**
(45) Date de publication et mention de la délivrance du brevet: **06.04.2016**
(21) Numéro de dépôt: 13756614.7
(22) Date de dépôt: 29.07.2013
(51) Int. Cl.: D04B 21/12, D03D 13/00, D03D 19/00, D04H 3/045, D04H 3/115, F16L 1/11

(54) **GRILLE HAUTE RÉSISTANCE A LIAISON RENFORCÉE POUR RÉSEAUX OU DISPOSITIFS ENTERRES**
HOCHFESTES GITTER MIT VERSTÄRKTEM BONDEN FÜR UNTERIRDISCHE NETZWERKE ODER VORRICHTUNGEN
HIGH-STRENGTH GRID WITH REINFORCED BONDING FOR BURIED NETWORKS OR DEVICES

(30) Priorité: 01.08.2012 FR 1257486
(43) Date de publication de la demande: 10.06.2015
(73) Titulaire: MDB Texinov SA, 38110 Saint Didier de la Tour (FR); Deltaval, 69006 Lyon (FR)
(72) Inventeur: DUCOL, Jean-Paul, F-69170 Les Sauvages (FR); TANKERE, Jacques, F-01800 Meximieux (FR); DUPUIS, Bastien, F-69003 Lyon (FR); AURAY, Germain, F-69400 Villefranche Sur Saone (FR)
(74) Mandataire: Cabinet Laurent & Charras
(86) Numéro de dépôt international: PCT/FR2013/051820
(87) Numéro de publication internationale: WO 2014/020270

(56) Documents cités:
- EP-A1- 1 422 349
- WO-A1-2010/007279
- WO-A2-2008/003902
- CN-A- 101 858 076
- FR-A1- 2 697 094
- FR-A1- 2 733 568
- JP-A- 2009 068 185
- US-B1- 6 706 376

## Description

### DOMAINE TECHNIQUE

La présente invention concerne une grille géotextile, enduite ou non, renforcée avec différentes fibres, l'association de ces fibres entre elles étant réalisée au moyen d'un liage particulier.

Cette grille géotextile est destinée à être mise en oeuvre pour des applications de protection des réseaux ou dispositifs enterrés lors de travaux de génie civil.

La conservation de l'intégrité de la grille permet en outre de lui conférer un rôle d'avertisseur essentiel pour les opérateurs intervenant dans lesdits travaux de génie civil.

La grille comporte au moins une série de brins ou câbles de renforcement parallèles formant des bandes. Cette grille peut également recevoir une enduction, par exemple en phase aqueuse, dans le cadre d'une démarche d'éco-conception, avec couleur vive déterminée pour optimiser son pouvoir avertisseur. Elle peut bénéficier de marquage pour renforcer la fonction avertisseur. Cette grille peut également intégrer des capteurs ou systèmes relatifs à l'auscultation et la surveillance des ouvrages (fibres optiques, réflecteur géoradar type bande aluminium, etc...)

Parmi les applications de génie civil susceptibles de mettre en oeuvre la grille de la présente invention, on peut citer les protections de pipeline pouvant contenir différent types de liquide (eau, pétrole etc.) ou différent gaz (gaz naturelle, oxygène, hydrogène etc.). La grille peut aussi servir pour protéger les câbles et/ou fibres enterrés dans le sol ou tout type de structure enfoui dans le sol (coffrage...).

La grille peut également être utilisée pour d'autres applications de protection de type minière par exemple.

La grille a pour objet principal de créer une barrière de résistance mécanique suffisante et apte à avertir les opérateurs sur la nature du réseau ou du dispositif enfoui ainsi que du danger potentiel. Elle peut aussi intégrer des capteurs ou actionneurs visant à faciliter des investigations autour du futur réseau enterré (fibre optique, sonde de température ou hygrométrique, résistance chauffante...).

### ETAT ANTERIEUR DE LA TECHNIQUE

Dans le domaine du génie civil, il existe des plaques de protection et des grillages avertisseurs. En outre, des plaques trouées sont communément employées pour remplir les fonctions de protection d'un réseau, notamment les infrastructures et réseaux soumis à sollicitations dues à une agression mécanique par un tiers, telle que par exemple résultant de la mise en action d'une pelle ou pelleteuse sur un pipeline-système Overpipe).

De telles plaques sont généralement réalisées en PEHD (polyéthylène haute densité) et constituent une protection mécanique complète vis-à-vis d'une agression. Elles ne remontent pas à la surface en cas d'agression, ni ne jouent le rôle d'un grillage avertisseur. Elles sont généralement liaisonnées les unes avec les autres dans ce système pour assurer la continuité de la protection. Ces plaques sont par exemple décrites dans le document WO 2012/004500.

Les grillages avertisseurs ou de signalisation sont également couramment employés lors de travaux de terrassement aux abords des réseaux. Leur fort pouvoir avertisseur visuel incite l'arrêt des travaux afin d'éviter un incident.

De tels grillages avertisseurs ou de signalisation sont généralement réalisés en polyéthylène, PVC ou polyoléfines et présentent une faible résistance mécanique et une grande capacité à la déformation. Leur couleur est liée aux règles conventionnelles concernant les travaux de réseaux enterrés, permettant de ce fait une identification de la nature du réseau situé en dessous. Ils sont parfois aussi associés à un marquage indiquant le type de réseau concerné. Cette déformabilité et cette couleur leur confèrent la possibilité d'émerger hors du sol, et d'être utilisés comme signalisation d'un danger.

Il existe par ailleurs les géo-grilles de renforcement, dont la résistance mécanique a été étudiée pour reprendre les efforts et déformations et stabiliser les ouvrages en terre. Ces grilles ont une cohésion limitée, le liage entre les fibres n'étant pas sollicité en fonctionnement

Les géo-grilles de renforcement sont généralement réalisées en fibres haute ténacité tel que le PET (polyéthylène téréphtalate), le verre, l'aramide, le polypropylène, etc... et peuvent être enduites (acrylique, PVC ou autre) ou associées avec d'autres matériaux (non-tissé, tissé, espaceur, résines, matrices).

Ces géo-grilles peuvent intégrer des capteurs de mesure, par exemple d'effort, de déformation ou de température, susceptibles de se présenter sous la forme de fibres optiques. Le document WO 2005/103606 décrit un exemple de tels systèmes.

Ces grilles sont soumises aux règles de l'art et codes de la construction, et doivent permettre d'assurer la longévité et la sécurité des ouvrages ainsi composés. En particulier, la qualité des grilles doit permettre de conserver un maximum de propriétés mécaniques lors d'épisodes agressifs sur l'ouvrage, soit en cours de construction (endommagement à la mise en oeuvre...), soit ultérieurement au cours de la vie de l'ouvrage (fluage, infiltration, milieu chimique environnant... ).

On explique mieux les propriétés attendues des différentes solutions de protection de la manière suivante:
- la plaque se trouvant au-dessus ou sur le côté de l'ouvrage à protéger doit pouvoir conserver son intégrité lors d'un épisode d'agression au-dessus de l'ouvrage (pelle de chantier par exemple). Un matériau présentant une bonne résistance avec un faible niveau de déformation peut avantageusement assurer cette fonction. Lors de l'agression mécanique, le produit doit pouvoir bloquer la progression de la pelle. Une continuité de protection doit être assurée par liaison des plaques entre elles.
- le grillage avertisseur doit être coloré et assez déformable pour pouvoir être remonté à la surface et assurer sa fonction d'avertissement.
- la géo-grille joue un rôle d'armature pour assurer la stabilité à long terme de l'ouvrage et ainsi la sécurité des usagers. Hormis des capacités de haute résistance, elle n'est pas conçue pour être une protection en cas d'agression par excavation : on peut notamment noter la faiblesse des liaisons des éléments de renfort entre eux.

Ces différentes solutions font intervenir des trous ou ouvertures traversantes, nécessaires pour laisser la libre circulation de l'eau dans les sols.

Les produits réalisés en polymères classiques doivent en fait souvent être surdimensionnés en termes de quantité de matière pour obtenir une déformation acceptable, suffisamment faible en usage normal. Les polymères courants à des coûts limités présentent un allongement trop important à faible contrainte.

Afin d'améliorer les propriétés mécaniques de la grille, une solution bi-module peut être envisagé, comme par exemple décrite dans le document WO 2010/007279

La solution bi-module apporte une meilleure réponse dans le cas d'une utilisation en protection car elle permet un blocage de la progression de la pelle plus rapidement dans un premier temps, tout en présentant une capacité de déformation apte à faire ressortir la grille de terre, afin de pouvoir avertir dans un deuxième temps, sans que la rupture de la grille n'intervienne.

Le bi-module associe une ou plusieurs fibres de renfort présentant des propriétés mécanique différentes. Les fibres peuvent être d'origine minérale (verre, basalte..), polymère (polyester, polypropylène, aramide...), naturelle (Lin, chanvre...). Le bi-module permet d'utiliser :
- des fibres à faible allongement (module d'élongation sous tension élevé) et avec une valeur d'allongement de rupture compris entre 2 et 5%, et
- des fibres de type polymères et/ou des fibres d'origine naturelle ayant un module d'élongation sous tension inférieur à celui des fibres à faible allongement, et une valeur d'allongement de rupture significativement supérieure à celui desdites fibres à faible allongement, et comprise entre 10 et 20%.

L'objet de la présente invention est de pouvoir associer les caractéristiques de protection ou de renforcement existant dans les plaques, les grillages avertisseurs et les géo-grilles, afin d'aboutir à une structure à la fois suffisamment déformable et visible, tout en étant résistante aux agressions et bloquante vis-à-vis de l'action résultant des engins de chantier.

Les documents CN 101858076 A, FR 2733568 A et JP 2009 068185 A appartiennent à l'état de la technique.

### EXPOSE DE L'INVENTION

La présente invention concerne donc une grille de très haute résistance, à double fonction de signalisation et de protection de tous réseaux ou dispositifs enterrés ou sous-marin.

Elle concerne une grille de protection renforcée, comportant au moins deux séries de brins ou de câblés de renforcement, parallèles entre eux, formant des bandes orientées selon au moins deux directions différentes. Les fibres des câblés ou brins peuvent être de même nature (polymère, aramide, minérale, ou fibre naturelle) ou bien de plusieurs matières. Elles peuvent en outre intégrer des capteurs ou fibres intelligentes pour l'auscultation du système ou de l'ouvrage de génie civil par des systèmes tels que les fibres optiques ou réflecteur géoradar.

Selon un premier aspect de l'invention, les bandes présentent des largeurs homogènes ou différentes s'étendant entre 1 et 20 centimètres, des bandes de plus grandes largeurs de plus de 6 cm étant ménagées sur les bords de la grille. En outre, les bandes orientées selon une même direction sont séparées les unes des autres d'une distancé au moins égale à 15 millimètres.

Ce faisant, on renforce la grille à ce niveau contre les agressions localisées en bordure de protection, et en outre, on peut réaliser un marquage beaucoup plus clair à l'aide d'une encre d'impression, afin d'assurer la fonction de signalisation, par exemple du type de réseau qu'est destinée à protéger ladite grille.

Ce renfort qui rend plus résistant le bord de la grille est important, car si la pelle attaquant en aveugle dans le sol ne touche que le bord de la grille, il est essentiel qu'elle rencontre une résistance importante et remonte la grille avertisseur.

Ces bandes de largeur plus importante peuvent résulter de la technologie de fabrication de la grille. Cependant, elles peuvent également être fixées à la grille après réalisation par collage ou couture.

Selon un second aspect de la présente invention, le liage des brins ou câblés constitutifs des bandes parallèles ou perpendiculaires entre eux est constitué d'armures spécifiques, réalisées à l'aide de fils de haute ténacité.

Ces fils comportent ou intègrent un polymère de haute performance en résistance et en module, dont la déformation à la rupture est inférieure à 6%. Ces fils sont par exemple choisis dans le groupe comprenant les aramides, polyester aromatique (Vectran®),polyéthylène à masse molaire très élevée (Dyneema®), polyvinyl acétate (PVA), polypropylène surétiré, polyéthylène haute densité, et les fibres minérales type verre ou basalte, éventuellement gainées ou composite.

Ce mode de liaison apporte une cohésion entre les bandes dans les différentes directions, permettant ainsi le transfert d'efforts et la résistance à la déchirure.

Ce type de produit est réalisé sur métier à tisser avec armure type « pas de gaze » ou sur métier Rachel trameur.

Selon un troisième aspect de l'invention, les câblés de trames en sens travers ne sont pas coupés, mais au contraire demeurent continus en bord de laize par retournement des mêmes fils sans interruption (par similitude avec la technologie du tissage à navette).

Ce type de produit peut être réalisé par adaptation de machine de type Rachel (commercialisée par exemple par la société Karl Mayer) ou sur un métier à tisser à navette avec une armure de type « pas de gaze ».

Dans ce cas, lorsque l'on sollicite la grille ainsi obtenue, on observe un effet de striction en largeur, augmentant la densité des câblés qui absorbent l'énergie. Les efforts sont ainsi transférés aux câblés de chaine, évitant la déchirure.

En outre, les fibres des câblés constitutifs des bandes peuvent être de nature homogène (polymère haute ténacité, aramide, fibre minérale ou d'origine naturelle) ou de plusieurs types différents (bi ou multi module).

Selon l'invention, les fibres des câblés constitutifs des bandes sont réalisées en un ou plusieurs matériaux combinés, choisis dans le groupe comprenant :
- les polymères suivants : le polyester, le polypropylène et le polyéthylène, l'aramide, le PVA, les polyesters aromatiques ;
- les fibres minérales, notamment le verre E, le verre AR et le verre S, et le basalte, éventuellement gainées ou protégées par une enduction de type acrylique, PVC ou bitumineuse ;
- les fibres d'origine naturelle, et notamment le chanvre, le lin.

La grille multi-composants peut être réalisée sur les métiers à tisser habituellement utilisés pour la réalisation de nappes (tels que les métiers à tisser DORNIER ou SULZER), La technique « Lino » de Dornier de type « pas de gaze » peut être utilisée car elle permet l'introduction d'un fil de liage indépendant des fils de renforcement

On peut également mettre en oeuvre la technologie chaîne et Rachel sur des métiers de type Karl Mayer ou Liba par exemple, avec ou sans insertion de trames.

Ces technologies permettent de travailler les fibres aramide, minérale, (verre ou basalte), sans altérer la fibre, notamment sur le plan mécanique, tout en réalisant des structures et maillages complexes incluant de multiples autres matières.

Des exemples d'armures sont décrits dans la description détaillée des figures. On peut cependant d'ores et déjà indiquer que le liage sur métier de type Rachel trameur ou multiaxial est de type chainette avec trame sectionnelle sous deux ou plusieurs aiguilles, ou de type deux barres maillantes en opposition sous deux ou plusieurs aiguilles, ou en armure de type atlas avec barres en opposition intervenant sur plusieurs colonnes de mailles ou par variation de programme électronique en séquence combinant les liages, et ainsi, introduisant une maille de butée faisant effet « rib-stop » c'est-à-dire bloquant le maillage.

Cette grille peut être monodirectionnelle, bidirectionnelle ou multidirectionnelle, et peut être associée à un non-tissé ou éventuellement à un autre type de support, tel qu'un tissé ou un multicouche. Cette nappe additionnelle assure ainsi simultanément les fonctions de protection, d'avertisseur, de renfort, de filtration et de séparation pour stabiliser parfaitement l'environnement des canalisations, câbles électriques ou autre équipement à protéger.

La grille peut également subir un traitement thermique, suivi ou non d'une enduction, propre à ajuster la rigidité du produit au besoin. Cette enduction peut être de type acrylique, PVC ou bitumineuse.

Un tel traitement thermique assure éventuellement un retrait des fibres de liage à température adaptée. Ce retrait améliore le serrage entre elles des fibres des différentes directions pour optimiser le transfert des efforts.

L'enduction permet quant à elle de protéger les fibres de renforcement et de liaison lors de l'agression, par exemple d'une pelle mécanique ou de toute autre agression extérieure, et contribue à la cohésion de l'ensemble.

L'enduction peut être réalisée à la suite de la production de la grille (en ligne avec le métier) ou bien, lors d'une seconde étape de production. L'enduction peut être réalisée sur des machines de type imprégnation-séchage de chez Menzel ou Ontec.

La grille est également marquée d'inscriptions informant de la nature du danger, par exemple « Canalisation Gaz », avant ou après l'enduction de la grille.
On peut noter que le marquage réalisé avant enduction permet de protéger le système d'écriture au sein de l'enduction et ainsi assurer sa durabilité.
La fonction d'avertisseur est assurée par la couleur de l'enduction, adaptée au réseau à traiter et/ou un marquage sur le produit (collage de message, encre, impression...).

Selon l'invention, les lés de grilles adjacents ou consécutifs peuvent être liés entre eux lors d'éventuels travaux sur l'ouvrage. Ainsi, si l'opérateur est amené à couper la grille à un endroit déterminé de l'ouvrage pour effectuer des réparations, il faut pouvoir raccorder celle-ci lors de la finition des travaux afin de préserver une protection continue. Grâce à la géométrie et à la forte résistance des bandes, la grille offre des espaces de 15 à 100 millimètres, permettant d'introduire différentes formes de boucles ou sangles afin de permettre ainsi de raccorder deux grilles entre elles. Des boucles en métal galvanisé, en plastique, ou en acier inoxydable sont insérées entre les bandes de chacune des grilles que l'on doit liaisonner sur une partie ou toute la largeur du produit. Ces boucles permettent de serrer les bandes lorsque la grille est sous tension. Ces boucles peuvent être complétées par un sanglage ou cordage pour assurer une meilleure diffusion des efforts à l'intérieur de la grille.

Ainsi, la liaison entre des lés consécutifs de grille peut être réalisée au niveau des bandes en sens production à l'aide de telles boucles ou système de type sangle ou cordage sur une partie ou sur toute la largeur de la grille.

La grille de protection présente de nombreux avantages :
- un liage spécifique permettant un meilleur transfert des charges entre les fibres mises en trame et celles mises en chaîne.
- la mise en oeuvre de bandes de fibres plus larges sur les bords, afin de répondre aux agressions locales à ce niveau. Ces bandes permettent un marquage de signalisation adapté.
- l'enduction colorée du produit permet de pouvoir avertir lors de sa remontée avec une pelle ou un engin de chantier. L'enduction peut en outre conférer une plus ou moins grande rigidité au produit. L'enduction permet également de renforcer et de protéger les liaisons entre les câbles de renfort.
- dans le cas de la solution bi ou multi-module, on peut obtenir une résistance mécanique très élevée avec une faible déformation dans un premier temps avec le premier type de fibres, ce qui conduit au blocage de la pelle ou de l'engin de chantier plus rapidement. Puis, dans un deuxième temps, la déformation de la grille devient possible afin de pouvoir remonter le produit pour qu'il conserve son intégrité et assure son rôle d'avertisseur.
- la possibilité d'insérer des fibres intelligentes, telles que des capteurs de type fibres optiques, réflecteur géoradar, des fils conducteurs, des résistances électriques, des bandes métalliques, etc... permet d'anticiper sur la surveillance et l'auscultation des réseaux.
- la construction spécifique avec enduction et bandes permet de réaliser un système de liaison entre les lés de grille pour permettre le transfert des efforts, notamment pour des réparations locales identifiées de la grille.

### BREVE DESCRIPTION DES FIGURES

La manière dont l'invention peut être réalisée et les avantages qui en découlent, ressortiront mieux des exemples de réalisation qui suivent, donnés à titre indicatif et non limitatif à l'appui des figures annexées.
La figure 1 illustre schématiquement une grille vue du dessus conformément à un premier mode de réalisation de l'invention, dont la figure 2 est une vue en section.
La figure 3 décrit une grille de l'invention avec continuité des trames.
Les figures 4, 5, 6 et 7 représentent différentes structures de liages des câbles de fils en sens production et travers.
La figure 8 décrit des modes de liaisons entre les bandes des grilles successives lors des réparations éventuelles.
Les figures 9 et 10 décrivent les modes d'attaque de la pelle sur chantier

### MODE DE REALISATION DE L'INVENTION

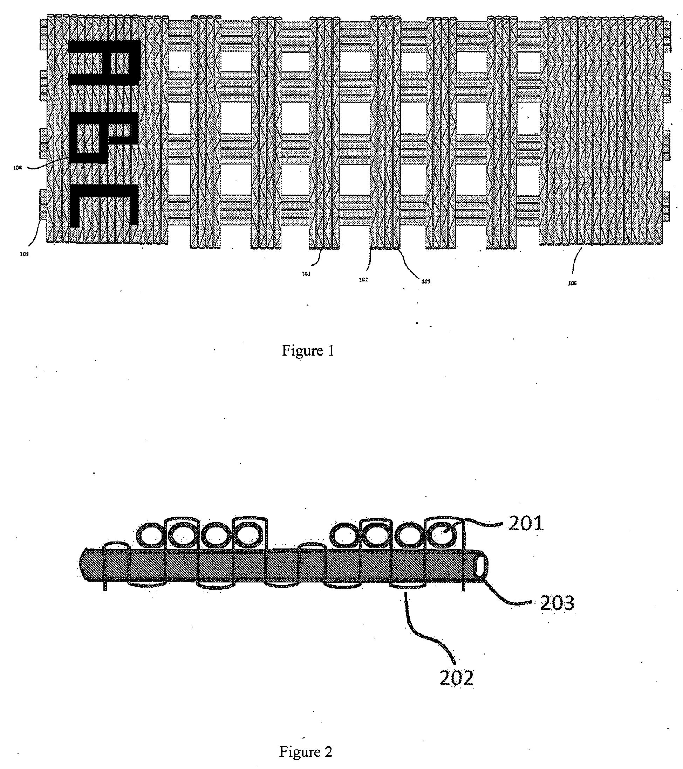

La figure 1 illustre la réalisation et la disposition des bandes de câblés en sens production (chaine) et en sens travers (trame).

En sens production, les bandes comportent les câblés (101, 103, 105) en nombre calculé pour obtenir la résistance nécessaire à la grille. Ceux-ci qui peuvent être de même nature ou comporter des câbles à base de fils de performances différentes pour obtenir un effet bi ou multi-module. Les techniques d'association des câblés ou fibres sur des fils de trames par machine de tissage ou métier Rachel trameur sont représentées schématiquement par les fils de liage (102).décrites ci-après.

La référence (104) représente le marquage sur une bande de câblé.

La figure 2 est une représentation schématique en section de la figure 1, qui permet de mieux distinguer cette structure avec les câblés sens chaine et les câblés sens trame avec schématiquement la liaison orthogonale de ceux-ci.

On a matérialisé par la référence (202) les fils de liage (en aramide, polyester haute ténacité ou bi-module) des fibres de renforts (203) et les fils de trame (201).

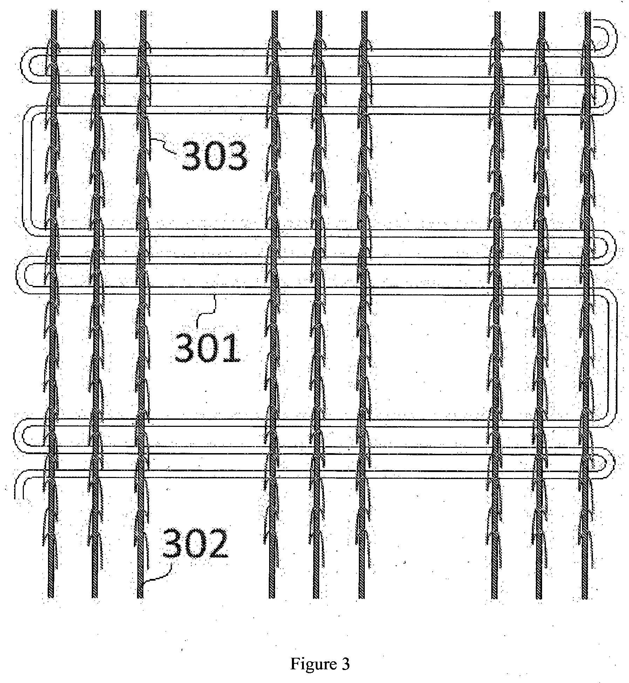

La figure 3 décrit l'exemple d'une construction avec tramage continu ; dans ce cas le retournement des fils de trame (301) sur les bords de la grille est sans interruption. Ce mode de réalisation est fabriqué par adaptation de machine Rachel de Type VS Karl Mayer par exemple, ou sur métier à tisser avec navette.

On retrouve sur cette figure 3 les câblés (302), lesquels sont reliés aux trames (301) par la structure de liage matérialisée par les fils (303).

On comprend que dans ce cas de construction, le fait d'exercer une traction dans le sens production de la grille a tendance à créer une striction en largeur de par le resserrement des trames en question.

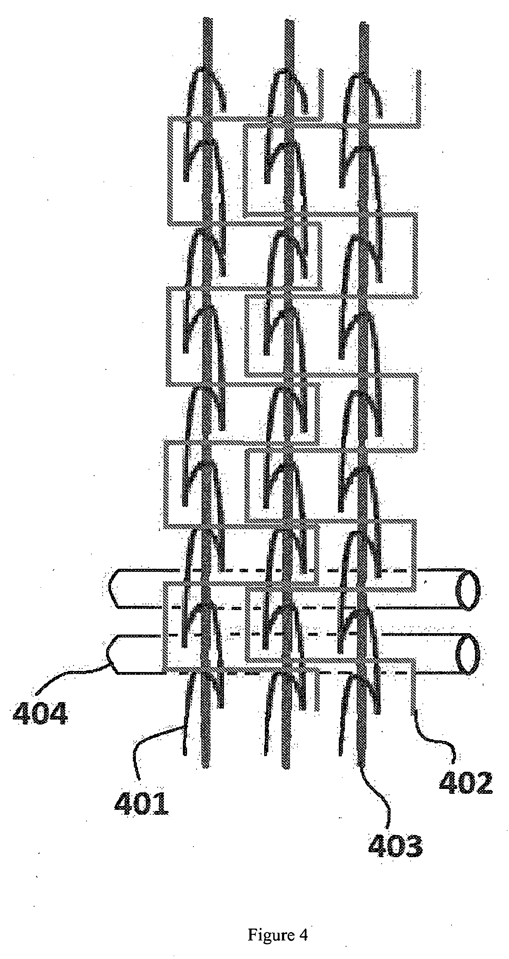

Les schémas illustrés au sein des figures 4, 5 et 6 représentent des exemples - non limitatifs - de liage pour associer solidement les brins ou câblés de fils techniques disposées en sens production et sens travers.

Ainsi, sur la figure 4, il s'agit d'une disposition de chainettes (401) reliées entre elles par des trames partielles (402), assurant d'une part la fixation des câblés (403) sens chaine avec les trames (404) transversales, et apportant, d'autre part, une résistance à la déchirure de la grille en question.

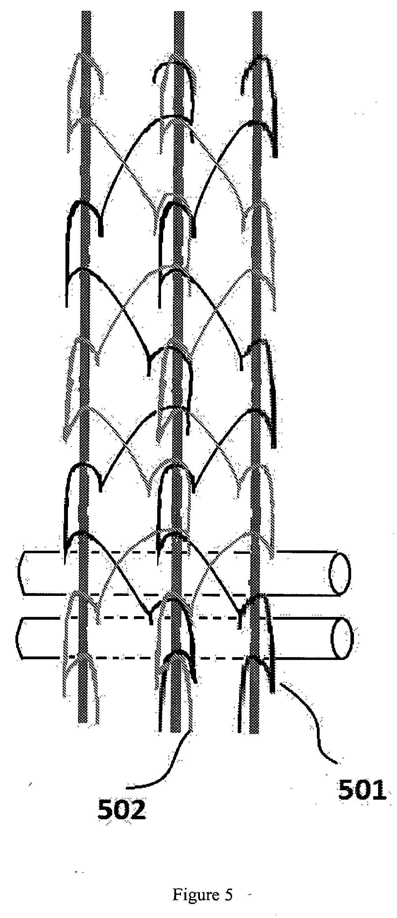

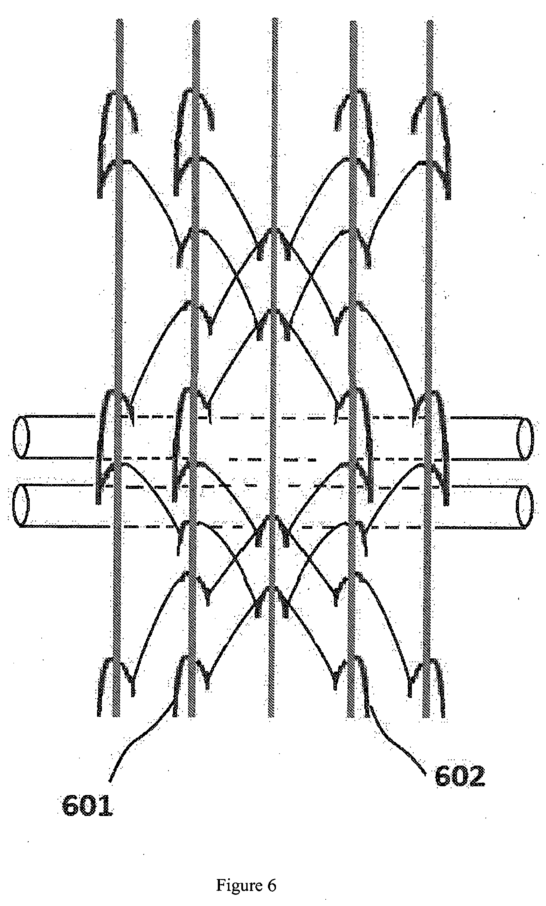

Les figures 5 et 6 correspondent à deux autres type de modes de liage avec des jeux de fils plus structurant pour davantage renforcer la liaison des câblés de fils et ainsi, s'opposer plus fortement à des risques de déchirements orthogonaux.

Sur la figure 5, on peut observer le déplacement en opposition des fils (501) et des fils (502) de façon à « serrer » au maximum les câblés des deux directions.

La figure 6 illustre un mode de liage encore plus structurant, de type « Atlas ». Ce mode de liage présente l'avantages de faire déplacer le fil de liage sur plusieurs colonnes de mailles, et en conséquence de mieux répartir les efforts de connexion ; ce qui est souhaité pour l'application spécifique de cette grille.

Ainsi que mentionné précédemment, ces liages agissent en combinaison avec la qualité et la nature des fils mis en oeuvre, c'est à dire avec les performances des fils, notamment de polyester haute ténacité ou d'aramide.

Les fils (401) et (402), (501) et (502), et (601) et (602) peuvent être de même nature ou de nature différente pour atteindre l'objectif d'une excellente liaison des câblés.

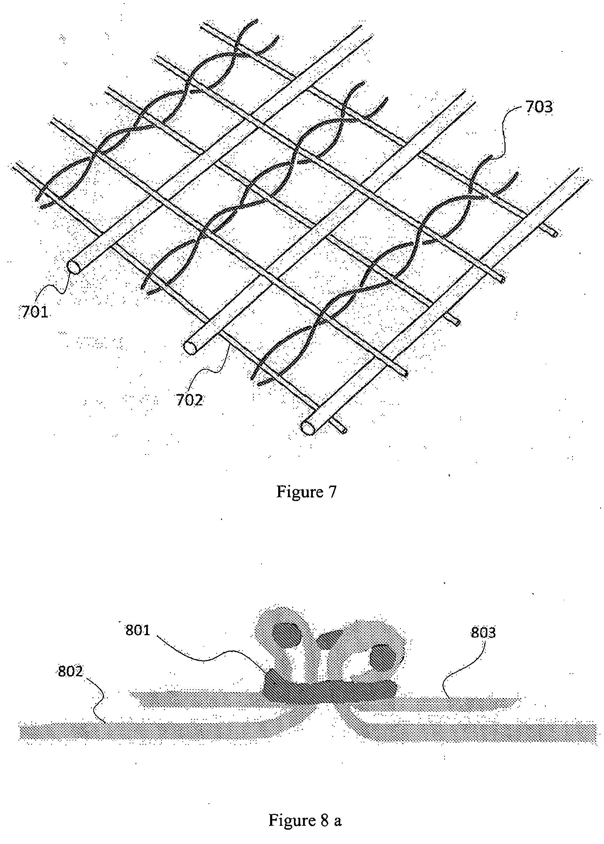

La figure 7 illustre une grille multi-composants qui peut être réalisée sur les métiers à tisser, tels que les métiers à tisser DORNIER ou SULZER. La technique « Lino » de Dornier peut être utilisée car elle permet l'introduction de fils de liage (703) indépendant des fils de renforcement (701) et (702).

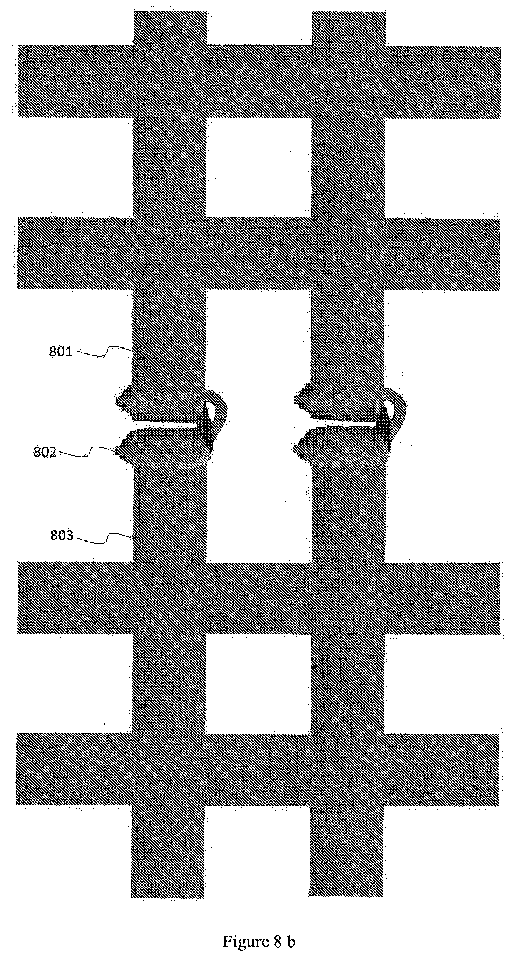

Les figures 8a et 8b illustrent le liaisonnement des bandes de grilles adjacentes lors de réparations sur l'ouvrage par des systèmes de boucles ou liaisons mécaniques qui permettent la solidité de jonction. On fait passer la première bande de renfort (802) ainsi que celle de la seconde bande de renfort (803) dans une boucle d'acier (801), avec la possibilité d'exercer une traction sur ces dernières pour relier efficacement les grilles - objet de l'invention. La figure 8b illustre parfaitement cette jonction très importante pour l'application de la grille, cette notion de jonction étant bien connue comme constituant un point faible des dispositifs de l'art antérieur.

On peut également concevoir que les bandes de renfort situées au niveau des bords de la grille peuvent elles-mêmes assurer le liaisonnement entre deux grilles adjacentes. Dans ce cas, on les raccorde également avec des boucles, du type réalisées en métal galvanisé ou autre. On peut ainsi assembler lesdites bandes de chacune des grilles que l'on doit liaisonner, sur une partie ou sur toute la largeur de la grille, et ceci, directement sur le chantier. Ces boucles permettent de serrer les bandes lorsque la grille est sous tension. On observe que dans ces conditions, une grande partie des efforts est retransmise et apporte ainsi une continuité des performances du système.

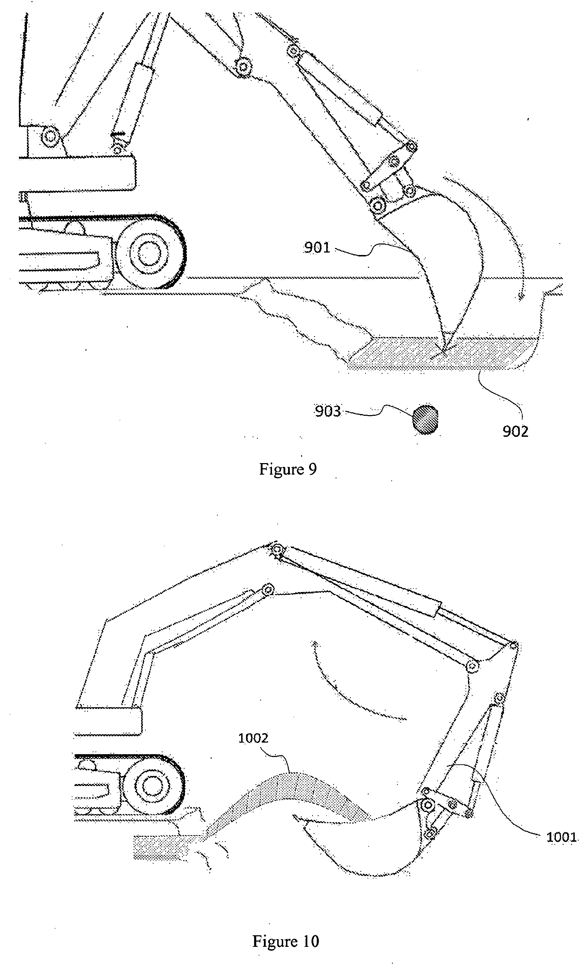

Les figures 9 et 10 représentent l'attaque d'une pelle de chantier (901) sur la grille (902) se trouvant au-dessus de l'ouvrage (903). La pelle (901) doit être bloquée par la grille (902) afin qu'elle ne puisse pas endommager l'ouvrage. L'effet bloquant est encore plus prononcé dans le cas où l'on met en oeuvre une grille multi-module au niveau des bandes de renfort et dans les fibres de liages. Lors de la remonté de la grille(1002) après l'action de la pelle (1001), ladite grille doit être suffisamment déformable pour conserver son intégrité et garder son pouvoir avertisseur.

## Revendications

1. Grille géotextile à haute résistance comportant des fibres de renfort rassemblées en câblés parallèles (101, 103, 105) formant des bandes orientées selon au moins deux directions,
• lesdites bandes étant séparées par des intervalles minimum de 15 millimètres,
• lesdites bandes présentant des largeurs homogènes ou différentes s'étendant entre 1 et 20 centimètres,
des bandes de grandes largeurs (106), supérieures à 6 centimètres, étant ménagées au moins sur les bords de la grille.

2. Grille géotextile à haute résistance selon la revendication 1, **caractérisée en ce que** les bandes (106) de plus grandes largeurs ménagées en bordure de la grille reçoivent un marquage (104).

3. Grille géotextile à haute résistance selon l'une des revendications 1 et 2, **caractérisée en ce que** la liaison entre les bandes de directions différentes est réalisée avec des fils de haute ténacité (202, 303, 401, 402, 501, 502, 601, 602, 703) dont la déformation à la rupture est inférieure à 6%.

4. Grille géotextile à haute résistance selon l'une des revendications 1 à 3, **caractérisée en ce que** les trames (301) ne sont pas coupées mais au contraire demeurent continues par retournement en bordure de laize, de telle sorte à apporter une cohésion entre chaines et trames et à assurer le transfert d'efforts.

5. Grille géotextile à haute résistance selon l'une des revendications 1 à 4, **caractérisée en ce qu'**elle est réalisé sur métier de type Rachel trameur ou multiaxial, et **en ce que** le liage est de type chainette avec trame sectionnelle sous deux ou plusieurs aiguilles, ou de type deux barres maillantes en opposition sous deux ou plusieurs aiguilles, ou en armure de type atlas avec barres en opposition intervenant sur plusieurs colonnes de mailles ou par variation de programme électronique en séquence introduisant une maille de butée faisant effet « rib-stop » c'est-à-dire bloquant le maillage

6. Grille géotextile à haute résistance selon l'une des revendications 1 à 4, **caractérisée en ce qu'**elle est réalisée sur une machine à tisser.

7. Grille géotextile à haute résistance selon l'une des revendications 1 à 6, **caractérisée en ce qu'**elle est monodirectionnelle, bidirectionnelle ou multidirectionnelle, et **en ce qu'**elle reçoit par insertion une nappe non-tissé ou tissé ou un multicouche.

8. Grille géotextile à haute résistance selon l'une des revendications 1 à 7, **caractérisée en ce que** les fibres des câblés constitutifs des bandes sont de nature homogène (polymère haute ténacité, aramide, fibre minérale ou d'origine naturelle) ou de plusieurs types différents (bi ou multi module).

9. Grille géotextile à haute résistance selon l'une des revendications 1 à 8, **caractérisée en ce que** le liage renforcé est réalisé en fils de haute ténacité choisis dans le groupe comprenant les aramides, les polyesters aromatiques, les polyéthylènes à masse molaire très élevée, le polyvinyl acétate (PVA), les polypropylènes surétirés, les polyéthlène haute densité, et les fibres minérales type verre ou basalte, éventuellement gainées ou composite,

10. Grille géotextile à haute résistance selon l'une des revendications 1 à 9, **caractérisée en ce que** les fibres des câblés constitutifs des bandes sont réalisées en un ou plusieurs matériaux combinés, choisis dans le groupe comprenant :
• les polymères suivants : le polyester, le polypropylène et le polyéthylène, l'aramide, le PVA, les polyesters aromatiques ;
• les fibres minérales, notamment le verre E, le verre AR et le verre S, et le basalte, éventuellement gainées ou protégées par une enduction de type acrylique, PVC ou bitumineuse ;
• les fibres d'origine naturelle, et notamment le chanvre, le lin.

11. Grille géotextile à haute résistance selon l'une des revendications 1 à 10, **caractérisée en ce qu'**elle est enduite par une enduction de type acrylique, PVC ou bitumineuse.

12. Grille géotextile à haute résistance selon l'une des revendications 1 à 11, **caractérisée en ce que** des fibres spécifiques choisies dans le groupe comprenant les fils conducteurs, les fibres optiques, une résistance électrique, des bandes métalliques, des réflecteurs géoradar type bandes en aluminium, une sonde de température ou hygrométrique sont intégrés dans sa structure afin de permettre la réalisation d'une auscultation ou d'une surveillance de l'ouvrage ou de la grille.

13. Grille géotextile à haute résistance selon l'une des revendications 1 à 12 **caractérisée en ce qu'**elle est soumise à un traitement thermique apte à assurer le retrait des fils de liage, afin de renforcer les liaisons entre les bandes orientées selon les différentes directions.

14. Grille géotextile à haute résistance selon l'une des revendications 1 à 13, **caractérisée en ce que** la liaison entre des lés consécutifs de grilles est réalisée au niveau des bandes en sens production à l'aide de boucles en métal galvanisé, plastique, acier inoxydable, ou système de type sangle ou cordage sur une partie ou sur toute la largeur de la grille.

## Patentansprüche

1. Hochfestes Geotextilgitter, die in parallelen Strängen (101, 103, 105) zusammengefasste Verstärkungsfasern umfasst, die Streifen bilden, die mindestens in zwei Richtungen ausgerichtet sind,
• wobei diese Streifen durch Mindestintervalle von 15 Millimetern getrennt sind,
• wobei diese Streifen homogene oder unterschiedliche Breiten aufweisen, die zwischen 1 und 20 Zentimeter liegen können,
wobei Streifen größerer Breite (106) über 6 Zentimeter mindestens an den Rändern des Gitters vorgesehen sind.

2. Hochfestes Geotextilgitter gemäß Anspruch 1, **dadurch gekennzeichnet, dass** die am Rand des Gitters vorgesehenen Streifen (106) größerer Breite mit einer Markierung (104) versehen werden.

3. Hochfestes Geotextilgitter gemäß einem der Ansprüche 1 und 2, **dadurch gekennzeichnet, dass** die Verbindung zwischen den Streifen in verschiedenen Richtungen mit hochfesten Fäden (202, 303, 401, 402, 501, 502, 601, 602, 703) ausgeführt wird, deren Reissdehnung kleiner als 6 % ist.

4. Hochfestes Geotextilgitter gemäß einem der Ansprüche 1 bis 3, **dadurch gekennzeichnet, dass** die Schussfäden (301) nicht abgeschnitten werden, sondern im Gegenteil durch Zurückführen am Bahnende endlos bleiben, so dass eine Kohäsion zwischen Kett- und Schussfäden entsteht und die Kraftübertragung sichergestellt ist.

5. Hochfestes Geotextilgitter gemäß einem der Ansprüche 1 bis 4, **dadurch gekennzeichnet, dass** es auf einem Rachel Trameur- oder einem mehrachsigen Webstuhl hergestellt wird und dadurch dass es sich um eine Bindung vom Typ Kette mit sektionellem Schuss mit zwei oder mehr Nadeln, oder vom Typ mit zwei gegenüberliegenden Maschenkämmen mit zwei oder mehr Nadeln, oder vom Typ Atlasbindung mit gegenüberliegenden Kämmen, die über mehrere Maschenstäbchen eingreifen, oder durch Variation eines Elektronikprogramms in Sequenzen, bei dem eine Anschlagmasche eingeführt wird, die als "rib-stop" wirkt, das heißt, die Maschenbildung blockiert, handelt.

6. Hochfestes Geotextilgitter gemäß einem der Ansprüche 1 bis 4, **dadurch gekennzeichnet, dass** es auf einer Webmaschine hergestellt wird.

7. Hochfestes Geotextilgitter gemäß einem der Ansprüche 1 bis 6, **dadurch gekennzeichnet, dass** es mono- direktional, bidirektional oder multi- direktional ist, und dass ein nicht gewebte oder gewebte Schicht oder ein Multilayer eingelegt wird.

8. Hochfestes Geotextilgitter gemäß einem der Ansprüche 1 bis 7, **dadurch gekennzeichnet, dass** die Fasern der Schnüre, aus denen die Streifen bestehen, homogen sind (hochfestes Polymer, Aramid, Mineralfaser oder Fasern natürlichen Ursprungs) oder aus mehreren verschiedenen Arten (Bi- oder Multi-Modul) bestehen.

9. Hochfestes Geotextilgitter gemäß einem der Ansprüche 1 bis 8, **dadurch gekennzeichnet, dass** die verstärkte Bindung mit hochfesten Fäden hergestellt wird, die aus der Gruppe ausgewählt werden, die aus Aramiden, aromatischen Polyestern, Polyethylenen mit sehr hoher Molmasse, Polyvinylacetat (PVA), überstreckten Polyethylenen, hochdichten Polyethylenen und eventuell ummantelten oder aus Verbundmaterial bestehenden Mineralfasern vom Typ Glas oder Basalt besteht.

10. Hochfestes Geotextilgitter gemäß einem der Ansprüche 1 bis 9, **dadurch gekennzeichnet, dass** die Fasern der Schnüre, aus denen die Streifen bestehen, aus einem oder mehreren kombinierten Materialien bestehen, die aus der Gruppe ausgewählt werden, die aus:
• den folgenden Polymeren: Polyester, Polypropylen, Polyethylen, Aramid, PVA, aromatischen Polyestern;
• eventuell ummantelten oder durch eine Acryl-, PVC- oder Bitumenbeschichtung geschützten Mineralfasern, einschließlich E-Glas, AR-Glas und S-Glas-und Basalt;
• natürlich vorkommenden Fasern, und insbesondere Hanf und Flachs, besteht.

11. Hochfestes Geotextilgitter gemäß einem der Ansprüche 1 bis 10, **dadurch gekennzeichnet, dass** es mit einer Acryl-, PVC- oder Bitumenbeschichtung beschichtet ist.

12. Hochfestes Geotextilgitter gemäß einem der Ansprüche 1 bis 11, **dadurch gekennzeichnet, dass** spezifische Fasern, die aus der Gruppe ausgewählt werden, aus Leitern, optischen Fasern, einem elektrischen Widerstand, Metallstreifen, GPR-Reflektoren vom Typ Aluminiumbänder, einem Temperatur- oder Feuchtigkeitsfühler besteht, in seine Struktur integriert werden, um eine Beobachtung oder Überwachung der baulichen Anlage oder des Gitters zu ermöglichen.

13. Hochfestes Geotextilgitter gemäß einem der Ansprüche 1 bis 12, **dadurch gekennzeichnet, dass** es einer Wärmebehandlung unterzogen wird, durch das der Rückzug der Bindungsfäden gewährleistet ist, um die Verbindungen zwischen die den verschiedenen Richtungen entsprechend ausgerichteten Streifen zu verstärken.

14. Hochfestes Geotextilgitter gemäß einem der Ansprüche 1 bis 13, **dadurch gekennzeichnet, dass** die Verbindung zwischen zwei aufeinanderfolgenden Gitterbahnen auf Höhe der Streifen in Produktionsrichtung mit Ringen aus galvanisiertem Metall, aus Kunststoff, Edelstahl oder einem System mit Gurt oder Seil über einen Teil oder über die gesamte Breite des Gitters ausgeführt wird.

## Claims

1. High strength geotextile mesh structure including reinforcing fibers assembled into parallel cable-cords (101, 103, 105) forming strips oriented in at least one of two directions,
- said strips are separated by intervals of at least 15 mm,
- said strips have a consistent or different widths, ranging between 1 and 20 cm,
Wide strips (106), wider than 6 cm, are formed at least on the edges of the mesh structure.

2. High strength geotextile mesh structure according to claim 1, **characterized in that** the widest strips (106) arranged on at least on the edges of the mesh structure are provided with marking (104).

3. High strength geotextile mesh structure according to one of claims 1 and 2, **characterized in that** the binding between the strips in different directions consists of high tenacity yarn (202, 303, 401, 402, 501, 502, 601, 602, 703) whose deformation on breakage is less than 6%.

4. High strength geotextile mesh structure according to one of claims 1 to 3, **characterized in that** the wefts (301) are not cut but, to the contrary, maintaining continuity by turning back at the edge of the width, to ensure cohesion between the warps and the wefts and thus ensure the transfer of forces.

5. High strength geotextile mesh structure according to one of claims 1 to 4, **characterized in that** it is constructed on a Rachel or multiaxial weaving loom, and **in that** the binding is of the warp type with a sectional wefts under two or several needles, or of the type with two meshing bars in opposition under two or several needles, or of an atlas type armor with bars in opposition, working on several columns of links or by a variation of the electronic program sequence, introducing a stopping link producing and "rib-stop" effect, that is, stopping the linking.

6. High strength geotextile mesh structure according to one of claims 1 to 4, **characterized in that** it is produced on a weaving loom.

7. High strength geotextile mesh structure according to one of claims 1 to 6, **characterized in that** it is mono-directional, bidirectional or multidirectional and that it receives, by insertion, a nonwoven or woven or multicoated layer.

8. High strength geotextile mesh structure according to one of claims 1 to 7, **characterized in that** the fibers of the cable-cords forming the strips are of a consistent type (high tenacity polymer, aramid, mineral or natural origin fiber), or of several different types (bi- or multi-module).

9. High strength geotextile mesh structure according to one of claims 1 to 8, **characterized in that** the reinforced binding is obtained using high tenacity yarn chosen from the group including aramids, aromatic polyesters, polyethylene with a very high molar density, polyvinyl acetate (PPA), overdrawn polypropylene, high density polyethylene and mineral fibers of the glass or basalt type, possibly lined or composite;

10. High strength geotextile mesh structure according to one of claims 1 to 9, **characterized in that** the fibers of the cable-cords forming the strips are made of one or several combined materials, chosen from the group including:
- the following polymers: polyester, polypropylene and polyethylene, aramid, PVA, aromatic polyesters;
- mineral fibers, especially E glass, AR glass and S glass, and basalt, possibly lined or protected by a coating of the acrylic, PVC or bitumen type;
- fibers of natural origin, in particular hemp and linen.

11. High strength geotextile mesh structure according to one of claims 1 to 10, **characterized in that** it is coated by acrylic, PVC or bitumen type coating.

12. High strength geotextile mesh structure according to one of claims 1 to 11, **characterized in that** the specific fibers chosen from the group containing conducting fibers, optical fibers, an electric resistor, metal strips, georadar reflectors of the aluminum strip type, a temperature or relative humidity probe being incorporated into its structure in order to allow investigation or monitoring of the structure or of the mesh structure.

13. High strength geotextile mesh structure according to one of claims 1 to 12, **characterized in that** it undergoes heat teatment capable of ensuring the shrinkage of the binding yarns, to reinforce the links between the strips oriented in different directions.

14. High strength geotextile mesh structure according to one of claims 1 to 13, **characterized in that** the link between the consecutive widths of the mesh structures is made in the strips, in the production direction, by means of galvanized metal, plastic, stainless steel buckles or of a system such as a strap or rope on part or all of the width of the mesh structure.
